# NEUE EUROPÄISCHE PATENTSCHRIFT

(11) **EP 3 276 243 B2**
(45) Veröffentlichungstag und Bekanntmachung des Hinweises auf die Entscheidung über den Einspruch: **10.11.2021**
(45) Hinweis auf die Patenterteilung: 28.11.2018
(21) Anmeldenummer: 16181684.8
(22) Anmeldetag: 28.07.2016
(51) Int. Cl.: F16L 41/02, F16L 53/00, F16L 53/38

(54) **KRAFTFAHRZEUG-FLUIDLEITUNG**
FLUID LINE FOR MOTOR VEHICLE
CONDUITE DE FLUIDE DE VEHICULE AUTOMOBILE

(43) Veröffentlichungstag der Anmeldung: 31.01.2018
(73) Patentinhaber: TI Automotive (Fuldabrück) GmbH, 34277 Fuldabrück (DE)
(72) Erfinder: Häckel, Andre, 34513 Waldeck (DE)
(74) Vertreter: Rohmann, Michael

(56) Entgegenhaltungen:
- WO-A1-2014/198915
- DE-B3-102006 006 211
- DE-B3-102006 006 211
- DE-U1-202007 015 036
- DE-U1-202011 100 991
- DE-U1-202011 100 991
- JP-U- S5 336 714
- US-A1- 2007 246 411

## Beschreibung

Die Erfindung betrifft eine Kraftfahrzeug-Fluidleitung zur Durchleitung zumindest eines fluiden Mediums, insbesondere zur Durchleitung von Harnstofflösungen für SCR-Katalysatorsysteme, wobei zumindest eine fluidführende Rohrleitung sowie zumindest ein an die Rohrleitung angeschlossener fluidführender Verbinder vorgesehen ist. - Es liegt im Rahmen der Erfindung, dass der Verbinder zumindest zwei Verbindungsabzweige aufweist, durch die das fluide Medium - insbesondere die Harnstofflösung - abgeführt bzw. weitergeführt wird. Zweckmäßigerweise wird das fluide Medium über zumindest einen Verbindungsabzweig zu einem Aggregat geleitet, wobei es sich bei dem Aggregat bevorzugt um eine Dosiereinrichtung handelt. Mit der Dosiereinrichtung ist ein dosiertes Zuführen des fluiden Mediums möglich und zwar nach empfohlener Ausführungsform eine dosierte Zuführung des fluiden Mediums bzw. der Harnstoffleitung zu einem SCR-Katalysatorsystem. In Kraftfahrzeugen - insbesondere in Fahrzeugen mit Dieselmotor - ist in der Regel ein SCR-Katalysatorsystem mit einem SCR-Katalysator für die Abgasbehandlung vorhanden (SCR: Selective Catalytic Reduction). Für eine effektive Reduzierung der im Abgas eines Kraftfahrzeuges enthaltenen Stickoxide wird dem Abgas vor einem SCR-Katalysator eine Harnstofflösung zudosiert.

Kraftfahrzeug-Fluidleitungen der eingangs genannten Art sind aus der Praxis in unterschiedlichen Ausführungsformen bekannt und zwar insbesondere auch bekannt im Zusammenhang mit der Durchleitung von Harnstofflösungen für SCR-Katalysatorsysteme. Dabei kann der an die Rohrleitung angeschlossene Verbinder zwei Verbindungsabzweige für die Harnstofflösung aufweisen, wobei die Harnstofflösung über diese Verbindungsabzweige jeweils einer Dosiereinrichtung für ein dosiertes Zuführen der Harnstofflösung zu einem SCR-Katalysatorsystem zugeleitet wird. Die Rohrleitung weist dabei einen einzigen Innenkanal auf, der von der Rohrleitungswandung umgeben ist. Aus dem Innenkanal der Rohrleitung tritt das fluide Medium bzw. tritt die Harnstofflösung in die beiden Verbindungsabzweige des Verbinders ein. - Beim Abschalten des Motors eines Kraftfahrzeuges mit einem solchen SCR-Katalysatorsystem wird das SCR-System - insbesondere die Rohrleitung und der Verbinder - entleert bzw. von der Harnstofflösung befreit. Wenn dann später das System wieder mit Harnstofflösung gefüllt wird treten insbesondere im Bereich des Verbinders und im Bereich der Verbindungsabzweige in der Flüssigkeitsströmung Wirbel und/oder Blasen auf, die eine gleichmäßige Strömung der Harnstofflösung stören und somit zur Beeinträchtigung des gesamten SCR-Systems führen können.

DE 20 2007 015 036 U1 offenbart eine beheizbare Kraftfahrzeug-Fluidleitung mit einer Innenleitung und einer Außenleitung. Ein Leitungsverbinder weist einen Doppelstutzen mit einem inneren Stutzen für die Innenleitung und einem äußeren Stutzen für die Außenleitung. Der Leitungsverbinder weist ferner erste und zweite Anschlüsse, die jeweils mit einem der Stutzen in Verbindung sind. Der Erfindung liegt das technische Problem zugrunde, eine Kraftfahrzeug-Fluidleitung der eingangs beschriebenen Art anzugeben, bei der diese Nachteile vermieden werden können.

Zur Lösung dieses technischen Problems lehrt die Erfindung eine Kraftfahrzeug-Fluidleitung zur Durchleitung gemäß Patentanspruch 1.

Gemäß besonders empfohlener Ausführungsform der Erfindung besteht die Rohrleitung bzw. die Außenleitung und/oder die Innenleitung aus Kunststoff bzw. im Wesentlichen aus Kunststoff. Zweckmäßigerweise besteht der an die Rohrleitung angeschlossene Verbinder aus Kunststoff bzw. im Wesentlichen aus Kunststoff.

Es liegt im Rahmen der Erfindung, dass die Rohrleitung unmittelbar an dem fluidführenden Verbinder angeschlossen ist. Eine bevorzugte Ausführungsform der Erfindung ist dadurch gekennzeichnet, dass die Außenleitung und/oder die Innenleitung stoffschlüssig mit dem Verbinder verbunden ist/sind. Eine sehr bevorzugte Ausführungsform der Erfindung zeichnet sich in diesem Zusammenhang dadurch aus, dass die Außenleitung und/oder die Innenleitung über eine Rotationsschweißverbindung und/oder über eine Laserschweißverbindung mit dem Verbinder verbunden ist/sind.

Der Erfindung liegt die Erkenntnis zugrunde, dass durch die erfindungsgemäße Aufteilung der Rohrleitung in eine fluidführende Außenleitung und eine fluidführende Innenleitung ungleichmäßige Strömungsverhältnisse im Verbinder und insbesondere im Bereich der beiden Verbindungsabzweige auf ein Minimum reduziert werden können bzw. quasi vermieden werden können. Das gilt vor allem auch für einen Befüllvorgang der erfindungsgemäßen Kraftfahrzeug-Fluidleitung mit einem fluiden Medium bzw. mit einer Harnstofflösung. Im Gegensatz zu den aus der Praxis bekannten Fluidleitungen kann dabei vor allem im Bereich des Verbinders eine sehr gleichmäßige Strömung des fluiden Mediums insbesondere im Übergangsbereich zwischen der Rohrleitung und den Verbindungsabzweigen beobachtet werden. Besondere Bedeutung kommt in diesem Zusammenhang auch der Ausführungsform zu, wonach sowohl die Außenleitung als auch die Innenleitung und der Verbinder aus Kunststoff bzw. im Wesentlichen aus Kunststoff bestehen und wobei die Außenleitung und die Innenleitung stoffschlüssig mit dem Verbinder verbunden sind bzw. bevorzugt über eine Rotationsschweißverbindung oder eine Laserschweißverbindung mit dem Verbinder verbunden sind. Diese Verbindungsart trägt überraschenderweise zu einer Vergleichmäßigung der Strömung im Bereich des Verbinders bzw. im Bereich der Verbindungsabzweige bei.

Es liegt im Rahmen der Erfindung, dass die Außenleitung der Rohrleitung parallel bzw. im Wesentlichen parallel zur Innenleitung der Rohrleitung angeordnet ist. Gemäß besonders bevorzugter Ausführungsform der erfindungsgemäßen Fluidleitung sind die Außenleitung und die Innenleitung koaxial bzw. im Wesentlichen koaxial zueinander angeordnet. Es liegt im Rahmen der Erfindung, dass die Querschnitte von Außenleitung und Innenleitung konzentrisch angeordnet sind bzw. konzentrisch zueinander angeordnet sind. Diese koaxiale bzw. konzentrische Anordnung von Außenleitung und Innenleitung bringt den Vorteil mit sich, dass das fluide Medium bzw. die Harnstofflösung sowohl in der Außenleitung als auch in der Innenleitung - bei einer bevorzugten Beheizung der Rohrleitung --sehr gleichmäßig beheizt werden kann. Zusätzlich trägt diese Ausgestaltung zu gleichmäßigen Strömungsverhältnissen an den beiden Verbindungsabzweigen bei.

Erfindungsgemäß weist die Rohrleitung über zumindest einen Teil ihrer Länge L die fluidführende Außenleitung und die in der Außenleitung aufgenommene fluidführende Innenleitung auf. Dabei liegt es im Rahmen der Erfindung, dass die Rohrleitung in ihrem an den Verbinder mit den beiden Verbindungsabzweigen angeschlossenen Bereich in Form der Außenleitung und der Innenleitung ausgebildet ist. Nach einer Ausführungsform der Erfindung ist die Rohrleitung über zumindest 50 % ihrer Länge L, vorzugsweise über zumindest 60 % ihrer Länge L und bevorzugt über zumindest 70 % ihrer Länge L in Form der Außenleitung und der Innenleitung ausgebildet. Erfindungsgemäß ist die Rohrleitung über einen Teil ihrer Länge L lediglich in Form eines einzigen Fluidkanals ausgebildet ist. In diesem Teil ihrer Länge L weist die Rohrleitung also nur einen Innenkanal bzw. Fluidkanal auf, der von der Rohrleitungswandung umgeben wird. Es liegt weiterhin im Rahmen der Erfindung, dass dieser Teil der Rohrleitung mit dem einzigen Fluidkanal unmittelbar in den Abschnitt der Rohrleitung mit der Außenleitung und der Innenleitung übergeht. Dabei ragt die Innenleitung also gleichsam in den Fluidkanal bzw. Innenkanal der Rohrleitung hinein. Es wurde bereits oben darauf hingewiesen, dass nach bevorzugter Ausführungsform in dem Rohrleitungsabschnitt mit Außenleitung und Innenleitung die beiden Leitungen bzw. Außenleitung und Innenleitung koaxial bzw. im Wesentlichen koaxial zueinander angeordnet sind.

Es liegt im Rahmen der Erfindung, dass die Außenleitung und die Innenleitung von dem fluiden Medium - insbesondere von der Harnstofflösung - in der gleichen Richtung durchströmt werden und zwar zweckmäßigerweise in Richtung des Verbinders mit den zumindest zwei Verbindungsabzweigen. Insofern unterscheidet sich die erfindungsgemäße Fluidleitung von an sich aus der Praxis bekannten Fluidleitungen, bei denen zwei zueinander parallele Rohrleitungen bzw. zueinander koaxiale Rohrleitungen im Gegenstrom von einem fluiden Medium durchströmt werden. Bei diesen aus der Praxis bekannten Rohrleitungen dient ein durch eine Außenleitung geleitetes fluides Medium der Temperierung des durch eine Innenleitung geleiteten fluiden Mediums oder umgekehrt. Im Rahmen der Erfindung ist eine gezielte Temperierung lediglich durch ein in der Außenleitung und/oder in der Innenleitung strömendes fluides Medium vorzugsweise nicht vorgesehen. Es liegt somit im Rahmen der Erfindung, dass sowohl die Außenleitung als auch die Innenleitung temperiermediumfrei von einem fluiden Medium durchströmt werden. Eine bevorzugte Ausführungsform einer Temperierung bzw. Beheizung der erfindungsgemäßen Fluidleitung bzw. von deren Rohrleitung wird nachfolgend beschrieben.

Nach einer empfohlenen Ausführungsform der Erfindung wird die Rohrleitung über zumindest einen Teil ihrer Länge L, vorzugsweise über ihre gesamte Länge L bzw. im Wesentlichen über ihre gesamte Länge L beheizt. Die bevorzugte Beheizung der erfindungsgemäßen Fluidleitung bzw. die Beheizung der Rohrleitung wird insbesondere dann vorgenommen, wenn es sich bei dem durchströmenden fluiden Medium um eine Harnstofflösung bzw. eine wässrige Harnstofflösung für ein SCR-Katalysatorsystem handelt. Eine solche Harnstofflösung bzw. wässrige Harnstofflösung hat den Nachteil, dass Harnstoff bei Temperaturen unter -11°C gefriert und teilweise auskristallisiert. Dadurch wird eine weitere funktionssichere Zufuhr der Harnstofflösung behindert oder vollständig blockiert. Folglich wird eine effektive Reduzierung der Stickoxide im Abgas des betreffenden Kraftfahrzeuges beeinträchtigt bzw. verhindert. Um diesen Nachteil zu vermeiden ist eine Beheizung der die Harnstofflösung führenden Rohrleitung zweckmäßig.

Erfindungsgemäß weist die Außenleitung zumindest ein Heizmittel, vorzugsweise zumindest einen Heizdraht auf. Erfindungsgemäß ist das zumindest eine Heizmittel in Form eines Heizdrahtes und/oder in Form eines flächigen Heizmittels ausgebildet. Erfindungsgemäß ist die Außenleitung von diesem Heizmittel bzw. von dem zumindest einen Heizdraht umgeben. Es empfiehlt sich, dass zumindest ein Heizdraht wendelförmig bzw. spiralförmig um die Außenleitung gewickelt ist. Über diesen zumindest einen Heizdraht erfolgt zweckmäßigerweise eine elektrische Beheizung und dazu ist der Heizdraht an eine Stromquelle angeschlossen. Gemäß einer weiteren Ausführungsvariante der Erfindung kann die Beheizung der Rohrleitung über zumindest ein elektrisch beheiztes flächiges Heizmittel erfolgen, insbesondere durch eine elektrisch beheizte Heizfolie, durch ein elektrisch beheiztes flächiges Heizband oder durch aufgedruckte Heizstrukturen. Das flächige Heizmittel ist dann zweckmäßigerweise um die Außenleitung der Rohrleitung gewickelt. Der Erfindung liegt insoweit die Erkenntnis zugrunde, dass bei einer erfindungsgemäßen Aufteilung der Rohrleitung in Außenleitung und Innenleitung eine Beheizung der Außenleitung mittels zumindest eines Heizmittels bzw. mittels zumindest eines elektrischen Heizdrahtes oder flächigen Heizmittels ausreichend ist. Dadurch kann auch die durch die Innenleitung geführte Harnstofflösung hinreichend temperiert werden um ein Einfrieren zu vermeiden.

Gemäß einer bewährten Ausführungsform der Erfindung wird auch der an die Außenleitung und die Innenleitung angeschlossene Verbinder beheizt, bevorzugt elektrisch beheizt. Zweckmäßigerweise ist auch hier zumindest ein Heizmittel bzw. elektrisch beheizbares Heizmittel um den Verbinder gewickelt. Es ist aber auch möglich, dass der Verbinder kein eigenes Heizmittel aufweist.

Eine bevorzugte Ausführungsform der erfindungsgemäßen Kraftfahrzeug-Fluidleitung ist dadurch gekennzeichnet, dass die Rohrleitung von einem Schutzrohr umgeben ist. Dabei sind Rohrleitung und Schutzrohr zweckmäßigerweise koaxial bzw. im Wesentlichen koaxial zueinander angeordnet. Eine beispielhafte Ausführungsform der Erfindung zeichnet sich dadurch aus, dass das die Rohrleitung umgebende Schutzrohr als Wellrohr ausgebildet ist. Nach bewährter Ausführungsform der Erfindung umgibt das Schutzrohr die Außenleitung und die Außenleitung umgibt wiederum die Innenleitung. Schutzrohr, Außenleitung und Innenleitung sind dann bevorzugt koaxial bzw. im Wesentlichen koaxial zueinander angeordnet. Es liegt im Rahmen der Erfindung, dass Schutzrohr, Außenleitung und Innenleitung im Schnitt konzentrisch zueinander orientiert sind.

Eine besonders empfohlene Ausführungsform der Erfindung ist dadurch gekennzeichnet, dass der Verbinder zumindest zwei Fluidkanäle und bevorzugt zumindest zwei zueinander parallele bzw. im Wesentlichen parallele Fluidkanäle aufweist, welche Fluidkanäle jeweils an einen Verbindungsabzweig des Verbinders angeschlossen sind. Es liegt im Rahmen der Erfindung, dass die beiden Fluidkanäle gleichsam die Verlängerung der Außenleitung und der Innenleitung der Rohrleitung bilden und zweckmäßigerweise als lineare Verlängerung von Außenleitung und Innenleitung ausgestaltet sind. Vorzugsweise sind auch die Fluidkanäle des Verbinders als Außen-Fluidkanal und Innen-Fluidkanal ausgebildet, wobei der Außen-Fluidkanal den Innen-Fluidkanal umgibt. Empfohlenermaßen sind die beiden Fluidkanäle (Außen-Fluidkanal und Innen-Fluidkanal) koaxial zueinander angeordnet. Die Fluidkanäle (Innen-Fluidkanal und Außen-Fluidkanal) sind gemäß empfohlener Ausführungsform der Erfindung unmittelbar an die Verbindungsabzweige des Verbinders angeschlossen. Nach einer Ausführungsvariante ist zumindest ein bzw. ein Verbindungsabzweig des Verbinders quer und vorzugsweise senkrecht zur Längsachse der Rohrleitung und zur Längsachse des Verbinders orientiert. Empfohlenermaßen ist zumindest ein bzw. ein Verbindungsabzweig des Verbinders als lineare Verlängerung der Rohrleitung bzw. eines Fluidkanals des Verbinders ausgebildet. Zweckmäßigerweise handelt es sich dabei um den an den Innen-Fluidkanal des Verbinders angeschlossenen Verbindungsabzweig. Vorzugsweise ist an den Außen-Fluidkanal des Verbinders ein Verbindungsabzweig angeschlossen, der quer bzw. senkrecht zur Längsachse der Rohrleitung und zur Längsachse des Verbinders angeordnet ist.

Es liegt im Rahmen der Erfindung, dass an jedem Verbindungsabzweig des Verbinders bzw. an beiden Verbindungsabzweigen des Verbinders eine Dosiereinrichtung für eine dosierte Zuführung des fluiden Mediums angeschlossen ist. Gemäß besonders bevorzugter Ausführungsformen der Erfindung ist an jeden Verbindungsabzweig des Verbinders eine Dosiereinrichtung eines SCR-Katalysatorsystems für ein dosiertes Zuführen von Harnstofflösung vorgesehen. Dabei ist zweckmäßigerweise zumindest eine Dosiereinrichtung im Motorraum des zugeordneten Kraftfahrzeuges angeordnet.

Gegenstand der Erfindung ist auch ein Verfahren gemäß Anspruch 12. Es liegt im Rahmen der Erfindung, dass die Innenleitung und/oder die Außenleitung aus Kunststoff bestehen bzw. im Wesentlichen aus Kunststoff bestehen. Weiterhin liegt es im Rahmen der Erfindung, dass die Innenleitung und/oder die Außenleitung durch Extrusion hergestellt wird/werden. Nach bevorzugter Ausführungsform der Erfindung wird an die Außenleitung vor ihrer Verbindung mit dem Aggregat aus Verbinder und Innenleitung ein zweiter Verbinder angeschlossen, wobei dieser zweite Verbinder bevorzugt ebenfalls stoffschlüssig mit der Außenleitung verbunden wird. Anschließend werden dann die beiden Aggregate aus dem ersten Verbinder und der Innenleitung und aus dem zweiten Verbinder und der Außenleitung so miteinander verbunden, dass die Innenleitung in die Außenleitung eingeführt bzw. eingeschoben wird und daraufhin die Außenleitung mit dem ersten Verbinder stoffschlüssig verbunden wird. Der erste Verbinder und/oder der zweite Verbinder sind nach empfohlener Ausführungsform der Erfindung als Schnellverbinder (sogenannte Quick-Connectoren) ausgebildet. Der erste Verbinder und/oder der zweite Verbinder werden vorzugsweise mittels eines Spritzgießverfahrens erzeugt. Wie oben bereits dargelegt zeichnet sich eine besonders bevorzugte Ausführungsform des erfindungsgemäßen Verfahrens dadurch aus, dass die Innenleitung mit dem Verbinder bzw. mit dem ersten Verbinder durch ein Rotationsschweißverfahren oder ein Laserschweißverfahren verbunden wird und/oder dass die Außenleitung mit dem Verbinder bzw. mit dem ersten Verbinder durch ein Rotationsschweißverfahren oder durch Laserschweißverfahren verbunden wird. Der Verbinder umfasst besonders bevorzugt ein lasertransparentes Material. Vorzugsweise findet auch die Verbindung zwischen der Außenleitung und dem zweiten Verbinder mittels eines Rotationsschweißverfahrens oder eines Laserschweißverfahrens statt.

Der Erfindung liegt die Erkenntnis zugrunde, dass bei einer erfindungsgemäßen Kraftfahrzeug-Fluidleitung stets eine gleichmäßige Strömung des durchströmenden fluiden Mediums bzw. der durchströmenden Harnstofflösung aufrechterhalten werden kann und zwar ohne störende Wirbel oder Blasen in dem fluiden Medium. Das gilt insbesondere auch für die Befüllung der erfindungsgemäßen Kraftfahrzeug-Fluidleitung im Rahmen eines SCR-Katalysatorsystems. Vor allem im Anschlussbereich zwischen Rohrleitung und Verbinder können bei den erfindungsgemäßen Fluidleitungen Ungleichmäßigkeiten in der Strömung auf ein Minimum reduziert werden bzw. quasi vermieden werden. Somit können bei der erfindungsgemäßen Lösung Beeinträchtigungen des SCR-Katalysatorsystems aufgrund von Strömungsungleichmäßigkeiten weitgehend ausgeschlossen werden. Nichtsdestoweniger ist eine einfache und problemlose Beheizung bzw. elektrische Beheizung der erfindungsgemäßen Fluidleitung und auch das an Außenleitung und Innenleitung angeschlossenen Verbinders möglich. Sowohl das die Außenleitung als auch das die Innenleitung durchströmende fluide Medium kann effektiv beheizt bzw. temperiert werden. Hervorzuheben ist weiterhin, dass die erfindungsgemäße Fluidleitung mit verhältnismäßig geringem Aufwand und relativ geringen Kosten gefertigt werden kann. Zu betonen ist weiterhin, dass zu den vorstehend beschriebenen Vorteilen der erfindungsgemäßen Fluidleitung auch die bevorzugte stoffschlüssige Verbindung der Komponenten, insbesondere durch Rotationsschweißen oder Laserschweißen begünstigend beiträgt.

Nachfolgend wird die Erfindung anhand einer lediglich ein Ausführungsbeispiel darstellenden Zeichnung näher erläutert. Es zeigen in schematischer Darstellung:
Fig. 1 Eine Seitenansicht der erfindungsgemäßen Kraftfahrzeug-Fluidleitung im Schnitt und

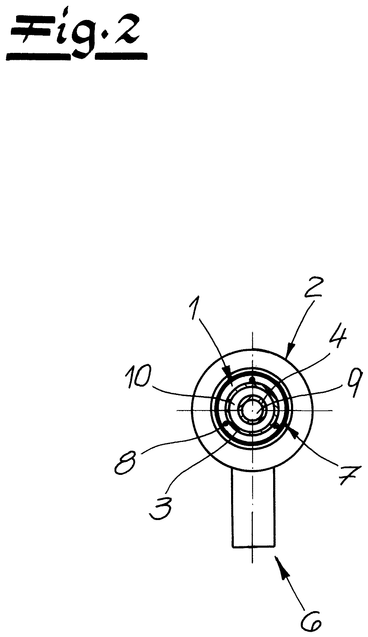

Fig. 2 einen Schnitt A-A durch den Gegenstand der Fig. 1.

Die Figuren zeigen eine erfindungsgemäße Kraftfahrzeug-Fluidleitung zur Durchleitung zumindest eines fluiden Mediums und vorzugsweise zur Durchleitung einer Harnstofflösung für ein SCR-Katalysatorsystem. Die erfindungsgemäße Fluidleitung weist im Ausführungsbeispiel eine fluidführende Rohrleitung 1 auf sowie einen an diese Rohrleitung 1 angeschlossenen fluidführenden Verbinder 2. Vorzugsweise und im Ausführungsbeispiel ist an dem anderen Ende der Rohrleitung 1 ebenfalls ein Verbinder 2' bzw. ein zweiter Verbinder 2' angeschlossen.

Die Rohrleitung 1 weist über einen Teil L1 ihrer Länge L eine fluidführende Außenleitung 3 sowie eine in der Außenleitung 3 aufgenommene längs der Außenleitung 3 verlaufende fluidführende Innenleitung 4 auf. Zweckmäßigerweise und im Ausführungsbeispiel ist die Außenleitung 3 parallel zur Innenleitung 4 angeordnet und Außenleitung 3 und Innenleitung 4 sind bevorzugt koaxial zueinander angeordnet. Die Rohrleitung 1 ist erfindungsgemäß und im Ausführungsbeispiel über einen zweiten Teil L2 ihrer Länge L lediglich in Form eines einzigen Fluidkanals 11 ausgebildet. Hier umgibt also die Rohrleitungswandung der Rohrleitung 1 lediglich einen nicht unterteilten Fluidkanal 11.

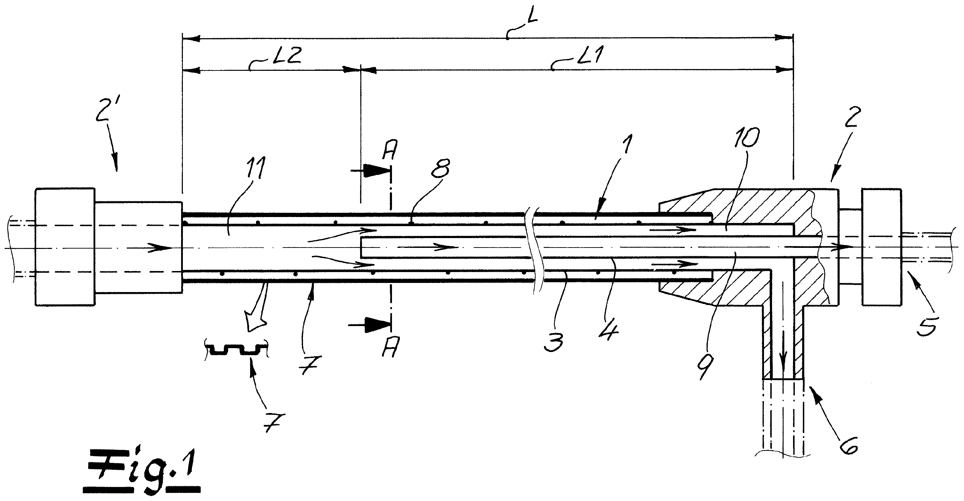

Im Ausführungsbeispiel wird die Außenleitung 3 und die Innenleitung 4 von einem fluiden Medium - vorzugsweise von Harnstofflösung - in der gleichen Richtung durchströmt. Diese Strömungsrichtung ist sowohl in der Außenleitung 3 als auch in der Innenleitung 4 in der Fig. 1 durch Pfeile angedeutet worden. Das fluide Medium bzw. die Harnstofflösung strömt somit zu dem Verbinder 2 hin.

Nach bevorzugter Ausführungsform und im Ausführungsbeispiel ist die Rohrleitung 1 unmittelbar an den fluidführenden Verbinder 2 angeschlossen und zwar bevorzugt und im Ausführungsbeispiel stoffschlüssig an den Verbinder 2 angeschlossen. Dabei ist empfohlenermaßen und im Ausführungsbeispiel sowohl die Außenleitung 3 als auch die Innenleitung stoffschlüssig mit dem Verbinder 2 verbunden. Die Außenleitung 3 und die Innenleitung 4 sind bevorzugt über eine Rotationsschweißverbindung oder eine Laserschweißverbindung mit dem Verbinder 2 verbunden.

Erfindungsgemäß ist die Rohrleitung 1 beheizt ausgebildet. Dabei ist empfohlenermaßen und im Ausführungsbeispiel die Außenleitung 3 von einem elektrisch beheizbaren Heizdraht 8 umgeben. Somit ist lediglich die Außenleitung 3 mit einem Heizmittel bzw. mit einem Heizdraht 8 versehen und es liegt im Rahmen der Erfindung, dass durch diese Beheizung auch das fluide Medium in der Innenleitung 4 ausreichend temperiert werden kann. - Zweckmäßigerweise und im Ausführungsbeispiel ist die Rohrleitung 1 von einem Schutzrohr 7 umgeben, wobei dieses Schutzrohr 7 empfohlenermaßen und im Ausführungsbeispiel als Wellrohr ausgebildet ist.

Insbesondere in der Fig. 1 ist erkennbar, dass der Verbinder 2 zwei parallele Fluidkanäle 9, 10 aufweist, die bevorzugt und im Ausführungsbeispiel eine lineare Verlängerung der Außenleitung 3 und der Innenleitung 4 bilden. Dabei entspricht der Innen-Fluidkanal 9 einer linearen Verlängerung der Innenleitung 4 und der Außen-Fluidkanal 10 einer linearen Verlängerung der Außenleitung 3, wobei der Außen-Fluidkanal 10 den Innen-Fluidkanal 9 des Verbinders 2 umgibt. Vorzugsweise und im Ausführungsbeispiel sind die beiden Fluidkanäle 9, 10 des Verbinders 2 koaxial zueinander angeordnet. Jeder der beiden Fluidkanäle 9, 10 ist bevorzugt und im Ausführungsbeispiel an einen Verbindungsabzweig 5, 6 des Verbinders 2 angeschlossen. Ein Verbindungsabzweig 6 ist dabei im Ausführungsbeispiel quer bzw. senkrecht zur Längsachse der Rohrleitung 1 bzw. zur Längsachse des Verbinders 2 angeordnet. Dieser Verbindungsabzweig 6 ist zweckmäßigerweise und im Ausführungsbeispiel an den Außen-Fluidkanal 10 angeschlossen. Ein weiterer Verbindungsabzweig 5 bildet eine lineare Verlängerung der Innenleitung 4 und des Innen-Fluidkanals 9.

Nach bevorzugter Ausführungsform sind die beiden Verbindungsabzweige 5, 6 des Verbinders 2 jeweils an eine in den Figuren nicht dargestellte Dosiereinrichtung für ein dosiertes Zuführen des fluiden Mediums angeschlossen. Dabei handelt es sich zweckmäßigerweise jeweils um eine Dosiereinrichtung für ein SCR-Katalysatorsystem. Die Dosiereinrichtungen sind bevorzugt an verschiedenen Stellen des SCR-Katalysatorsystems bzw. des zugeordneten Kraftfahrzeuges angeordnet.

## Patentansprüche

1. Kraftfahrzeug-Fluidleitung zur Durchleitung zumindest eines fluiden Mediums, insbesondere zur Durchleitung von Harnstofflösungen für SCR-Katalysatorsysteme, wobei zumindest eine fluidführende Rohrleitung (1) sowie zumindest ein an die Rohrleitung (1) angeschlossener fluidführender Verbinder (2) vorgesehen ist, wobei die Rohrleitung (1) über zumindest einen Teil ihrer Länge L eine fluidführende Außenleitung (3) sowie eine in der Außenleitung (3) aufgenommene, längs der Außenleitung (3) verlaufende fluidführende Innenleitung (4) aufweist, wobei die Außenleitung (3) zumindest ein Heizmittel aufweist und von zumindest einem Heizmittel umgeben ist, wobei das zumindest eine Heizmittel in Form eines Heizdrahtes (8) und/oder in Form eines flächigen Heizmittels ausgebildet, wobei der Verbinder (2) zumindest einen bzw. einen ersten Verbindungsabzweig (5) aufweist, der in Fluidverbindung mit der Außenleitung (3) steht sowie zumindest einen bzw. einen zweiten Verbindungsabzweig (6) aufweist, der in Fluidverbindung mit der Innenleitung (4) steht, wobei die Rohrleitung (1) über einen Teil ihrer Länge L lediglich in Form eines einzigen Fluidkanals (11) ausgebildet ist und wobei die Rohrleitung (1) über einen weiteren Teil ihrer Länge L in Form der Außenleitung (3) und der Innenleitung (4) ausgebildet ist.

2. Kraftfahrzeug-Fluidleitung nach Anspruch 1, wobei die Rohrleitung (1) unmittelbar an den fluidführenden Verbinder (2) angeschlossen ist.

3. Kraftfahrzeug-Fluidleitung nach einem der Ansprüche 1 oder 2, wobei die Außenleitung (3) und/oder die Innenleitung (4) stoffschlüssig mit dem Verbinder (2) verbunden ist/sind.

4. Kraftfahrzeug-Fluidleitung nach Anspruch 3, wobei die Außenleitung (3) und/oder die Innenleitung (4) über eine Rotationsschweißverbindung und/oder eine Laserschweißverbindung mit dem Verbinder (2) verbunden ist/sind.

5. Kraftfahrzeug-Fluidleitung nach einem der Ansprüche 1 bis 4, wobei die Außenleitung (3) parallel bzw. im Wesentlichen parallel zur Innenleitung (4) angeordnet ist.

6. Kraftfahrzeug-Fluidleitung nach einem der Ansprüche 1 bis 5, wobei die Außenleitung (3) und die Innenleitung (4) koaxial bzw. im Wesentlichen koaxial zueinander angeordnet sind.

7. Kraftfahrzeug-Fluidleitung nach einem der Ansprüche 1 bis 6, wobei die Außenleitung (3) und die Innenleitung (4) von einem fluiden Medium - insbesondere von der Harnstofflösung - in der gleichen Richtung durchströmbar sind bzw. durchströmt werden.

8. Kraftfahrzeug-Fluidleitung nach einem der Ansprüche 1 bis 7, wobei die Rohrleitung (1) über zumindest einen Teil ihrer Länge L, vorzugsweise über ihre gesamte Länge L beheizt ausgebildet ist.

9. Kraftfahrzeug-Fluidleitung nach einem der Ansprüche 1 bis 8, wobei die Rohrleitung (1) von einem Schutzrohr (7) umgeben ist.

10. Kraftfahrzeug-Fluidleitung nach einem der Ansprüche 1 bis 9, wobei der Verbinder (2) zumindest zwei parallele bzw. im Wesentlichen parallele Fluidkanäle (9,10) aufweist, welche Fluidkanäle (9,10) jeweils an einen Verbindungsabzweig (5, 6) des Verbinders (2) angeschlossen sind.

11. Kraftfahrzeug-Fluidleitung nach einem der Ansprüche 1 bis 10, wobei an jedem Verbindungsabzweig (5,6) des Verbinders (2) eine Dosiereinrichtung für ein dosiertes Zuführen des fluiden Mediums vorgesehen ist.

12. Verfahren zur Herstellung einer Kraftfahrzeug-Fluidleitung nach einem der Ansprüche 1 bis 11, wobei ein Verbinder (2) mit einer Innenleitung (4) stoffschlüssig verbunden wird, wobei das Aggregat aus Verbinder (2) und Innenleitung (4) anschließend an eine Außenleitung (3) angeschlossen wird, indem die Innenleitung (4) in die Außenleitung (3) eingeführt bzw. eingeschoben wird und die Außenleitung (3) danach stoffschlüssig mit dem Verbinder (2) verbunden wird, wobei die Außenleitung (3) zumindest ein Heizmittel aufweist und von zumindest einem Heizmittel umgeben ist, wobei das zumindest eine Heizmittel in Form eines Heizdrahtes (8) und/oder in Form eines flächigen Heizmittels ausgebildet ist.

## Claims

1. A motor vehicle fluid line for conducting at least one fluid medium, in particular for conducting urea solutions for SCR catalytic converter systems, wherein at least one fluid-conducting pipe (1) along with at least one fluid-conducting connector (2) hooked up to the pipe (1) are provided, wherein the pipe (1) has a fluid-conducting outer line (3) over at least a portion of its length L, along with a fluid-conducting inner line (4) that is accommodated in the outer line (3) and runs along the outer line (3), wherein the outer line (3) comprises at least one heating means and is preferably enveloped by at least one heating means, wherein the at least one heating means is designed as a heating wire (8) and/or a flat heating means, and wherein the connector (2) has at least one or a first connecting branch (5) that is fluidically connected with the outer line (3), as well as at least one or a second connecting branch (6) that is fluidically connected with the inner line (4), wherein the pipe (1) is designed as only a single fluid channel (11) over a portion of its length L, and wherein the pipe (1) is designed as the outer line (3) and inner line (4) over another portion of its length L.

2. The motor vehicle fluid line according to claim 1, wherein the pipe (1) is hooked up directly to the fluid-conducting connector (2).

3. The motor vehicle fluid line according to one of claims 1 or 2, wherein the outer line (3) and/or the inner line (4) is/are firmly bonded with the connector (2).

4. The motor vehicle fluid line according to claim 3, wherein the outer line (3) and/or the inner line (4) are joined with the connector (2) via a rotation welded joint and/or a laser welded joint.

5. The motor vehicle fluid line according to one of claims 1 to 4, wherein the outer line (3) is arranged parallel or essentially parallel to the inner line (4).

6. The motor vehicle fluid line according to one of claims 1 to 5, wherein the outer line (3) and inner line (4) are arranged coaxially or essentially coaxially to each other.

7. The motor vehicle fluid line according to one of claims 1 to 6, wherein the outer line (3) and inner line (4) can conduct or conduct a fluid medium, in particular the urea solution, in the same direction.

8. The motor vehicle fluid line according to one of claims 1 to 7, wherein the pipe (1) is heated over at least a portion of its length L, preferably over its entire length.

9. The motor vehicle fluid line according to one of claims 1 to 8, wherein the pipe (1) is enveloped by a protective tube (7).

10. The motor vehicle fluid line according to one of claims 1 to 9, wherein the connector (2) has at least two parallel or essentially parallel fluid channels (9, 10), with the fluid channels (9, 10) each being hooked up to a connecting branch (5, 6) of the connector (2).

11. The motor vehicle fluid line according to one of claims 1 to 10, wherein a dosing device for a dosed supply of the fluid medium is provided on each connecting branch (5, 6) of the connector (2).

12. A method for manufacturing a motor vehicle fluid line according to one of claims 1 to 11, wherein a connector (2) is firmly bonded with an inner line (4), wherein the aggregate comprised of the connector (2) and inner line (4) is then hooked up to an outer line (3) by introducing or inserting the inner line (4) into the outer line (3), and thereafter firmly bonding the outer line (3) with the connector (2), wherein the outer line (3) has at least one heating means, and preferably is enveloped by at least one heating means, wherein the at least one heating means is designed as a heating wire (8) and/or as a flat heating means.

## Revendications

1. Ligne de fluide pour véhicule automobile, destinée à faire passer au moins un milieu fluide, notamment à faire passer des solutions d'urée pour des systèmes de catalyseur SCR, au moins une canalisation (1) conductrice de fluide ainsi qu'au moins un connecteur (2) conducteur de fluide raccordé sur la canalisation (1) étant prévus, sur au moins une partie de sa longueur L, la canalisation (1) comportant un conduit extérieur (3) conducteur de fluide, ainsi qu'un conduit intérieur (4) conducteur de fluide, réceptionné dans le conduit extérieur (3), s'écoulant le long du conduit extérieur (3), le conduit extérieur (3) comportant au moins un moyen de chauffage et étant de préférence entouré d'au moins un moyen de chauffage, l'au moins un moyen de chauffage étant conçu sous la forme d'un filament chauffant (8) et/ou sous la forme d'un moyen de chauffage plan et le connecteur (2) comportant au moins une ou au moins une première dérivation de liaison (5) qui est en liaison fluidique avec le conduit extérieur (3), ainsi qu'au moins ou au moins une deuxième dérivation de liaison (6) qui est liaison fluidique avec le conduit intérieur (4), sur une partie de sa longueur, L la canalisation (1) étant conçue uniquement sous la forme d'un unique canal à fluide (11) et sur une autre partie de sa longueur L, la canalisation (1) étant conçue sous la forme du conduit extérieur (3) et du conduit intérieur (4).

2. Ligne de fluide pour véhicule automobile selon la revendication 1, la canalisation (1) étant directement raccordée sur le connecteur (2) conducteur de fluide.

3. Ligne de fluide pour véhicule automobile selon l'une quelconque des revendications 1 ou 2, le conduit extérieur (3) et/ou le conduit intérieur (4) étant relié(s) par matière avec le connecteur (2).

4. Ligne de fluide pour véhicule automobile selon la revendication 3, le conduit extérieur (3) et/ou le conduit intérieur (4) étant relié(s) par une soudure par rotation et/ou par une soudure au laser avec le connecteur (2).

5. Ligne de fluide pour véhicule automobile selon l'une quelconque des revendications 1 à 4, le conduit extérieur (3) étant placé à la parallèle ou sensiblement à la parallèle du conduit intérieur (4).

6. Ligne de fluide pour véhicule automobile selon l'une quelconque des revendications 1 à 5, le conduit extérieur (3) et le conduit intérieur (4) étant placés de manière coaxiale ou sensiblement coaxiale l'un par rapport à l'autre.

7. Ligne de fluide pour véhicule automobile selon l'une quelconque des revendications 1 à 6, le conduit extérieur (3) et le conduit intérieur (4) étant susceptibles d'être traversés ou étant traversés dans la même direction par un milieu fluide (notamment par une solution d'urée).

8. Ligne de fluide pour véhicule automobile selon l'une quelconque des revendications 1 à 7, sur au moins une partie de sa longueur L, de préférence sur toute sa longueur L, la canalisation (1) étant conçue en étant chauffée.

9. Ligne de fluide pour véhicule automobile selon l'une quelconque des revendications 1 à 8, la canalisation (1) étant entourée par un tube protecteur (7).

10. Ligne de fluide pour véhicule automobile selon l'une quelconque des revendications 1 à 9, le connecteur (2) comportant deux canaux à fluide (9, 10) parallèles ou sensiblement parallèles, lesquels canaux à fluide (9, 10) sont raccordés chacun sur une dérivation de liaison (5, 6) du connecteur (2).

11. Ligne de fluide pour véhicule automobile selon l'une quelconque des revendications 1 à 10, sur chaque dérivation de liaison (5, 6) du connecteur (2) étant prévu un système de dosage pour une alimentation dosée du milieu fluide.

12. Procédé, destiné à fabriquer une ligne de fluide pour véhicule automobile selon l'une quelconque des revendications 1 à 11, lors duquel on relie par matière un connecteur (2) avec un conduit intérieur (4), l'ensemble constitué du connecteur (2) et du conduit intérieur (4) étant raccordé ensuite sur un conduit extérieur (3), par insertion ou emboîtement du conduit intérieur (4) dans le conduit extérieur (3) et par la suite, le conduit extérieur (3) étant relié par matière avec le connecteur (2), le conduit extérieur (3) comportant au moins un moyen de chauffage et étant entouré de préférence d'au moins un moyen de chauffage, l'au moins un moyen de chauffage étant conçu sous la forme d'un filament chauffant (8) et/ou sous la forme d'un moyen de chauffage plan.
